# EUROPEAN PATENT APPLICATION

(11) **EP 3 026 285 A2**
(43) Date of publication of application: **01.06.2016**
(21) Application number: 15173505.7
(22) Date of filing: 24.06.2015
(51) Int. Cl.: F16D 23/06

(54) **SYNCHRONIZATION DEVICE FOR A MANUAL TRANSMISSION**

(30) Priority: 25.11.2014 JP 2014237424
(71) Applicant: AISIN AI Co., Ltd., Nishio-shi Aichi 445-0006 (JP)
(72) Inventor: TANAKA, Hirotoshi, Nishio-shi, Aichi 445-0006 (JP); ICHIKAWA, Masaya, Nishio-shi, Aichi 445-0006 (JP); OSAWA, Hideya, Nishio-shi, Aichi 445-0006 (JP)
(74) Representative: TBK

(57) **Abstract**

Provided is a synchronization device for a manual transmission, which is capable of reducing an axial length of a hub sleeve. The synchronization device for a manual transmission includes a clutch hub (21), a hub sleeve (22), a gear piece, a synchronizer ring, and shifting key mechanisms (30). A synchronizer key (33) of each of the shifting key mechanisms (30) includes a key (31) positioned in a circumferential direction with respect to the clutch hub (21) and mounted in an axially and radially displaceable state, and a moving object (32) mounted in a radially movable state into a radial mounting hole (31b) formed through the key (31) and biased radially outward by a coil spring (34). A top portion (32a) of the moving object (32), which is projected radially outward from the mounting hole (31 b) to engage with an inner circumferential surface of the hub sleeve (22), is formed into a shape having an engagement portion (32a1) extending linearly in an axial direction.

## Description

### BACKGROUND OF THE INVENTION

### 1. Field of the Invention

The present invention relates to a synchronization device for a manual transmission, and more particularly, to a synchronization device for a manual transmission, which employs ball keys (constructed of keys mounted at several positions on a clutch hub in a circumferential direction and balls (moving objects) mounted on the keys in a movable manner) as synchronizer keys of shifting key mechanisms in the synchronization device.

### 2. Description of the Related Art

Synchronization devices for manual transmissions generally include a clutch hub, a hub sleeve, a gear piece, and a synchronizer ring. The clutch hub is to be rotated integrally with a transmission shaft, and the hub sleeve has internal splines formed thereon to mesh in an axially slidable manner with external splines formed on an outer circumference of the clutch hub. The gear piece is positioned on one side of the clutch hub in an axial direction and formed integrally with a transmission gear on its clutch hub side, which is supported on the transmission shaft in a freely rotatable manner. In addition, the gear piece has external splines formed on an outer circumference of the gear piece to be meshable with the internal splines. The synchronizer ring is arranged between the clutch hub and the gear piece and has external splines formed on an outer circumference of the synchronizer ring to be meshable with the internal splines. In addition, the synchronizer ring synchronizes rotation of the transmission gear with rotation of the hub sleeve by a frictional engagement force obtained at a tapered cone portion formed between the synchronizer ring and the gear piece when the hub sleeve is shifted in the axial direction from a neutral position toward a shift position.

The synchronization devices also include shifting key mechanisms positioned in a circumferential direction of the clutch hub at several positions on the clutch hub in the circumferential direction and mounted in an axially and radially displaceable state. Each of the shifting key mechanisms includes a synchronizer key biased radially outward by a spring and engageable in a disengageable state with a key groove formed in a middle of each of the internal splines in the axial direction when the hub sleeve is located at the neutral position. In addition, each of the shifting key mechanisms pushes the synchronizer ring in the axial direction when the hub sleeve is shifted from the neutral position toward the shift position.

Incidentally, there is given such a synchronization device that the synchronizer key of each of the above-mentioned shifting key mechanisms includes a key positioned in the circumferential direction with respect to the clutch hub and mounted in an axially and radially displaceable state, and a moving object (ball) mounted in a radially movable state into a radial mounting hole formed through the key, and that the spring is a coil spring engaging with the outer circumference of the clutch hub at one end of the coil spring, and with an inner circumferential side of the moving object through the mounting hole at the other end of the coil spring. This synchronization device is disclosed in, for example, Japanese Patent Application Laid-open No. 2000-154834.

In the synchronization device for a manual transmission as disclosed in Japanese Patent Application Laid-open No. 2000-154834, spherical balls are employed as the moving objects mounted in a radially movable state through radial mounting holes formed through the keys. Therefore, when the axial length of the hub sleeve is set shorter and the hub sleeve is shifted in the axial direction from the neutral position to one shift position (when the shift is completed) under a state in which engagement margins (engagement portions) for restricting the radial movement of the balls are not secured between the hub sleeve and the balls, the balls may abnormally be projected in the radial direction from the mounting holes due to the biasing forces of the coil springs. In this case, the balls and the keys having the balls received and held therein are moved in the axial direction to the other side so that the synchronizer ring arranged on the other side is pushed in the axial direction. To prevent such trouble, a necessary and sufficient axial length is secured for the hub sleeve to secure the above-mentioned engagement margins between the hub sleeve and the balls. For this reason, it is difficult to reduce the axial length of the hub sleeve.

### SUMMARY OF THE INVENTION

The present invention has been made to solve the above-mentioned problem (that is, to provide a synchronization device capable of securing necessary and sufficient engagement margins for restricting radial movement of moving objects between a hub sleeve and the moving objects when a shift is completed, and reducing an axial length of the hub sleeve).

The synchronization device for a manual transmission, including the above-mentioned clutch hub, hub sleeve, gear piece, synchronizer ring, and shifting key mechanisms, has the following features.

A synchronizer key of each of the shifting key mechanisms includes a key positioned in a circumferential direction with respect to the clutch hub and mounted in an axially and radially displaceable state, and a moving object mounted in a radially movable state into a radial mounting hole formed through the key. A spring configured to bias the moving object is a coil spring engaging with an outer circumference of the clutch hub at one end of the coil spring, and with an inner circumferential side of the moving object through the radial mounting hole at another end of the coil spring. A top portion of the moving object, which is projected radially outward from the radial mounting hole to engage with an inner circumferential surface of the hub sleeve, is formed into a shape having an engagement portion extending linearly in an axial direction (that is, an oblong shape elongated in the axial direction). The above-mentioned engagement portion extending linearly in the axial direction may have a band-like shape or a linear shape.

In the synchronization device for a manual transmission according to one embodiment of the present invention, when the hub sleeve is shifted in the axial direction from a neutral position toward a shift position, the shifting key mechanisms push the synchronizer ring in the axial direction. Therefore, a frictional engagement force is obtained at a tapered cone portion formed between the synchronizer ring and the gear piece, to thereby synchronize rotation of a transmission gear with rotation of the hub sleeve. At this time, a difference between the rotation of the transmission gear and the rotation of the hub sleeve is eliminated, and hence the transmission gear and the hub sleeve are rotated integrally with each other. Therefore, the hub sleeve is moved in the axial direction while rotating the synchronizer ring relative to the gear piece, to thereby reach the shift position.

Incidentally, as the moving object that is a component of the synchronizer key, in place of a spherical ball, the synchronization device for a manual transmission according to the one embodiment of the present invention employs such a moving object (aspherical ball) that the top portion of the moving object, which is projected radially outward from the radial mounting hole of the key to engage with the inner circumferential surface of the hub sleeve, is formed into the shape having the engagement portion extending linearly in the axial direction (for example, an oblong shape elongated in the axial direction). Therefore, in the one embodiment of the present invention, as compared to the case where a spherical ball is employed as the moving object, a necessary and sufficient axial engagement margin (engagement margin for restricting radially outward movement of the moving object) can be secured between the hub sleeve and the moving object when the shift is completed. Thus, the axial length of the hub sleeve can be reduced by an amount corresponding to the increase in engagement margin in the axial direction.

### BRIEF DESCRIPTION OF THE DRAWINGS

FIG. 1 is a schematic sectional view of a synchronization device for a manual transmission according to one embodiment of the present invention when a hub sleeve is located at a neutral position in a region where shifting key mechanisms are arranged.
FIG. 2 is a schematic perspective view for illustrating a relationship among a clutch hub, the hub sleeve, and the shifting key mechanism illustrated in FIG. 1.
FIG. 3 is a perspective view of a key alone in the shifting key mechanism illustrated in FIG. 2.
FIG. 4 is a perspective view of a moving object (aspherical ball) alone in the shifting key mechanism illustrated in FIG. 2.
FIG. 5 is an explanatory operational view for illustrating a relationship between the hub sleeve and the moving object under a state in which the hub sleeve illustrated in FIG. 1 is shifted to a shift position on the left of FIG. 5.
FIG. 6 is an explanatory operational view corresponding to FIG. 5, for illustrating an embodiment in which a spherical moving object is employed in place of the moving object of the present invention as illustrated in FIG. 5.

### DETAILED DESCRIPTION OF THE PREFERRED EMBODIMENTS

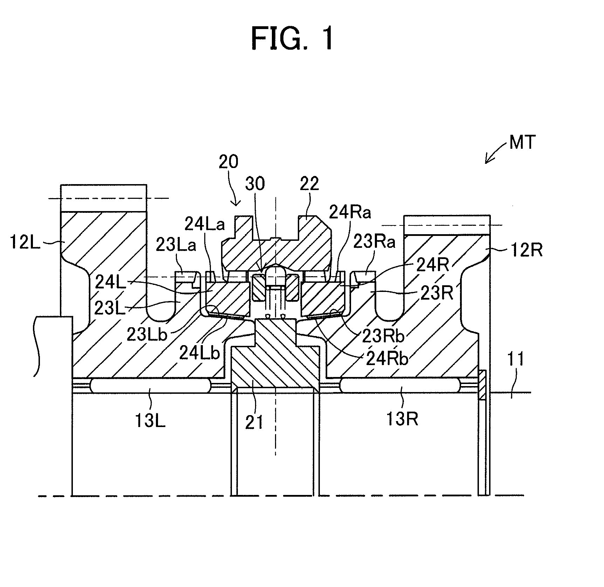

Now, an embodiment of the present invention is described with reference to the drawings. FIG. 1 to FIG. 5 are illustrations of a synchronization device for a manual transmission according to one embodiment of the present invention. In a manual transmission MT illustrated in FIG. 1, transmission gears (gears) 12R and 12L are mounted through intermediation of bearings 13R and 13L, respectively, onto a transmission shaft 11 supported on a casing (not shown) in a freely rotatable manner through intermediation of bearings (not shown). The transmission gears 12R and 12L are supported on the transmission shaft 11 in a freely rotatable manner under a state in which their axial movement is restricted. A synchronization device 20 is arranged between the transmission gears 12R and 12L.

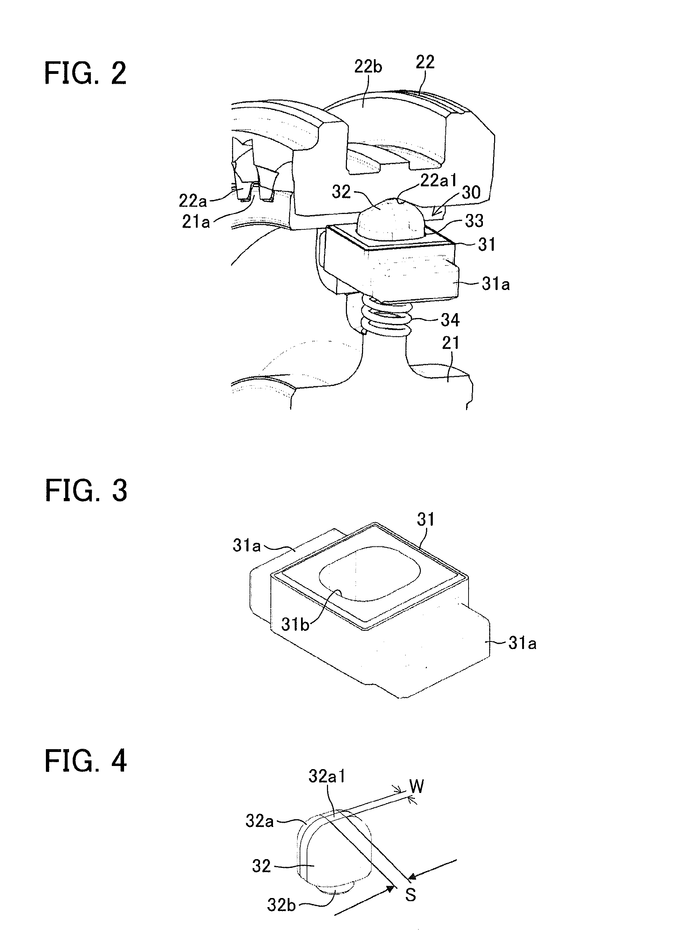

The synchronization device 20 includes a clutch hub 21, a hub sleeve 22, a pair of right and left gear pieces 23R and 23L, a pair of right and left synchronizer rings 24R and 24L, and shifting key mechanisms 30. The clutch hub 21 is arranged between the transmission gears 12R and 12L with its axial movement restricted by both the transmission gears 12R and 12L. Further, the clutch hub 21 is spline-coupled to the transmission shaft 11 so that the clutch hub 21 is rotated integrally with the transmission shaft 11. The hub sleeve 22 is mounted on an outer circumference of the clutch hub 21, and has internal splines 22a formed on an inner circumference of the hub sleeve 22 to mesh in an axially slidable manner with external splines 21 a (see FIG. 2) formed on the outer circumference of the clutch hub 21. Further, a circumferential groove 22b is formed on an outer circumference of the hub sleeve 22 so that a part of a shift fork (not shown) engages therewith in a freely slidable manner.

The gear pieces 23R and 23L are formed integrally with the transmission gears 12R and 12L on their clutch hub side, respectively, and external splines 23Ra and 23La meshable with the internal splines 22a of the hub sleeve 22 are formed on outer circumferences of the gear pieces 23R and 23L, respectively. Further, cone surfaces (conical shaft portions) 23Rb and 23Lb are formed on outer circumferences of end portions of the gear pieces 23R and 23L on their clutch hub side, respectively. The synchronizer rings 24R and 24L are arranged between the clutch hub 21 and the respective gear pieces 23R and 23L, and external splines 24Ra and 24La meshable with the internal splines 22a of the hub sleeve 22 are formed on outer circumferences of the synchronizer rings 24R and 24L, respectively. Further, cone surfaces (conical hole portions) 24Rb and 24Lb are formed on inner circumferences of the synchronizer rings 24R and 24L, respectively. Tapered cone portions are formed by the cone surfaces (conical hole portions) 24Rb and 24Lb and the cone surfaces (conical shaft portions) 23Rb and 23Lb of the respective gear pieces 23R and 23L.

Therefore, in the synchronization device 20, when the hub sleeve 22 is shifted in the axial direction from a position illustrated in FIG. 1 (neutral position) toward a shift position on the left of FIG. 1, a frictional engagement force is obtained between the transmission gear 12L and the hub sleeve 22 (specifically, at the tapered cone portion formed between the gear piece 23L and the synchronizer ring 24L), thereby being capable of synchronizing rotation of the transmission gear 12L with the rotation of the hub sleeve 22. When the hub sleeve 22 is shifted in the axial direction from the position illustrated in FIG. 1 (neutral position) toward a shift position on the right of FIG. 1, on the other hand, a frictional engagement force is obtained between the transmission gear 12R and the hub sleeve 22 (specifically, at the tapered cone portion formed between the gear piece 23R and the synchronizer ring 24R), thereby being capable of synchronizing rotation of the transmission gear 12R with the rotation of the hub sleeve 22.

The shifting key mechanisms 30 are arranged equiangularly at three positions in a circumferential direction on the outer circumferential portion of the clutch hub 21. As illustrated in FIG. 2, each shifting key mechanism 30 includes a synchronizer key 33 formed of a key 31 and a moving object 32, and a coil spring 34. As illustrated in FIG. 2 and FIG. 3, the key 31 is positioned in the circumferential direction with respect to the clutch hub 21 by a pair of arm portions 31a, and is mounted in an axially and radially displaceable state. When the hub sleeve 22 is located at the neutral position, the key 31 engages in a disengageable state with a key groove 22a1 formed in the middle of each of the internal splines 22a in the axial direction. A radial mounting hole 31 b is formed through a center portion of the key 31, and the moving object 32 is mounted into the mounting hole 31b in a radially movable state. The coil spring 34 engages with the outer circumference of the clutch hub 21 at one end (inner end) of the coil spring 34, and also engages with an inner circumferential side of the moving object 32 through the mounting hole 31 b at the other end (outer end) of the coil spring 34, to thereby bias the moving object 32 radially outward.

Incidentally, in this embodiment, as illustrated in FIG. 4, the moving object 32 is formed into an aspherical shape, and a top portion 32a of the moving object 32, which is projected radially outward from the mounting hole 31 b to engage with an inner circumferential surface of the hub sleeve 22, is formed into a shape having an engagement portion 32a1 extending linearly in the axial direction (that is, an oblong shape elongated in the axial direction when viewed in the circumferential direction). The engagement portion 32a1 is formed into a band-like shape with a predetermined width W and a predetermined axial length S. A projection 32b engaging with the other end (outer end) of the coil spring 34 is formed on the inner circumference of the moving object 32.

In the embodiment having the structure as described above, when the hub sleeve 22 is shifted in the axial direction from the neutral position toward each shift position, the shifting key mechanisms 30 push each of the synchronizer rings 24R and 24L in the axial direction. Therefore, frictional engagement forces are obtained at the tapered cone portions formed between the synchronizer ring 24R and the gear piece 23R and between the synchronizer ring 24L and the gear piece 23L, to thereby synchronize the rotation of each of the transmission gears 12R and 12L with the rotation of the hub sleeve 22. At this time, a difference between the rotation of each of the transmission gears 12R and 12L and the rotation of the hub sleeve 22 is eliminated, and hence each of the transmission gears 12R and 12L and the hub sleeve 22 are rotated integrally with each other. Therefore, the hub sleeve 22 is moved in the axial direction while rotating each of the synchronizer rings 24R and 24L relative to corresponding one of the gear pieces 23R and 23L, to thereby reach the shift position.

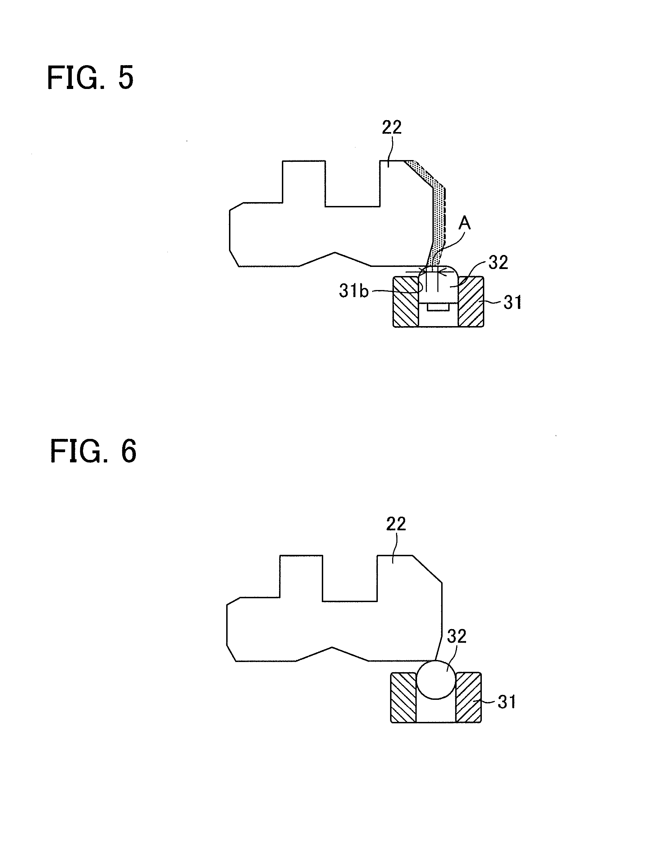

Incidentally, as the moving object 32 that is a component of the synchronizer key 33, in place of a spherical ball, this embodiment employs such a moving object (aspherical ball) 32 that the top portion 32a of the moving object 32, which is projected radially outward from the mounting hole 31 b of the key 31 to engage with the inner circumferential surface of the hub sleeve 22, is formed into the shape having the engagement portion 32a1 extending linearly in the axial direction (shape illustrated in FIG. 4). Therefore, in this embodiment, as compared to the case where a spherical ball is employed as the moving object 32 (see FIG. 6), a necessary and sufficient axial engagement margin (engagement margin A for restricting radially outward movement of the moving object 32 as illustrated in FIG. 5) can be secured between the hub sleeve 22 and the moving object 32 when the shift is completed. Thus, the axial length of the hub sleeve can be reduced by an amount corresponding to the increase in engagement margin in the axial direction (see the reference symbol "A" of FIG. 5). The above-mentioned engagement margin A corresponds to a half of the length S of the engagement portion 32a1 of the moving object 32 in a joint clutch direction.

In the above-mentioned embodiment, the present invention is carried out by forming the moving object 32 so that the engagement portion 32a1 is formed into the band-like shape with the predetermined width W and the predetermined axial length S. Alternatively, the present invention may be carried out by forming the moving object 32 so that the engagement portion 32a1 is formed into a linear shape with a reduced width W of the engagement portion 32a1.

In the above-mentioned embodiment, the present invention is carried out by employing a single-cone synchronizer as each synchronizer ring. Alternatively, the present invention may be carried out by employing a multi-cone synchronizer (for example, a triple-cone synchronizer or a double-cone synchronizer) as each synchronizer ring. In this manner, various modifications may be made to the present invention.

In the above-mentioned embodiment, the present invention is applied to the embodiment in which each gear piece is formed integrally with the corresponding transmission gear on its clutch hub side. Alternatively, the present invention may be applied, in a similar manner or with appropriate modifications, to an embodiment in which each gear piece is formed as a member separate from the corresponding transmission gear and those gear piece and transmission gear are coupled to each other in an integrally rotatable manner (also in this case, each gear piece is arranged integrally with the corresponding transmission gear on its clutch hub side).

Provided is a synchronization device for a manual transmission, which is capable of reducing an axial length of a hub sleeve. The synchronization device for a manual transmission includes a clutch hub (21), a hub sleeve (22), a gear piece, a synchronizer ring, and shifting key mechanisms (30). A synchronizer key (33) of each of the shifting key mechanisms (30) includes a key (31) positioned in a circumferential direction with respect to the clutch hub (21) and mounted in an axially and radially displaceable state, and a moving object (32) mounted in a radially movable state into a radial mounting hole (31 b) formed through the key (31) and biased radially outward by a coil spring (34). A top portion (32a) of the moving object (32), which is projected radially outward from the mounting hole (31 b) to engage with an inner circumferential surface of the hub sleeve (22), is formed into a shape having an engagement portion (32a1) extending linearly in an axial direction.

## Claims

1. A synchronization device for a manual transmission, comprising:
a clutch hub to be rotated integrally with a transmission shaft;
a hub sleeve having internal splines formed thereon to mesh in an axially slidable manner with external splines formed on an outer circumference of the clutch hub;
a gear piece positioned on one side of the clutch hub in an axial direction and formed integrally with a transmission gear on its clutch hub side,
the transmission gear being supported on the transmission shaft in a freely rotatable manner,
the gear piece having external splines formed on an outer circumference of the gear piece to be meshable with the internal splines;
a synchronizer ring being arranged between the clutch hub and the gear piece and having external splines formed on an outer circumference of the synchronizer ring to be meshable with the internal splines,
the synchronizer ring being configured to synchronize rotation of the transmission gear with rotation of the hub sleeve by a frictional engagement force obtained at a tapered cone portion formed between the synchronizer ring and the gear piece when the hub sleeve is shifted in the axial direction from a neutral position toward a shift position; and
shifting key mechanisms positioned in a circumferential direction of the clutch hub at several positions on the clutch hub in the circumferential direction and mounted in an axially and radially displaceable state,
each of the shifting key mechanisms comprising a synchronizer key biased radially outward by a spring and engageable in a disengageable state with a key groove formed in a middle of each of the internal splines in the axial direction when the hub sleeve is located at the neutral position,
the each of the shifting key mechanisms being configured to push the synchronizer ring in the axial direction when the hub sleeve is shifted from the neutral position toward the shift position,
wherein the synchronizer key of the each of the shifting key mechanisms comprises:
a key positioned in the circumferential direction with respect to the clutch hub and mounted in an axially and radially displaceable state; and
a moving object mounted in a radially movable state into a radial mounting hole formed through the key,
wherein the spring comprises a coil spring engaging with the outer circumference of the clutch hub at one end of the coil spring, and with an inner circumferential side of the moving object through the radial mounting hole at another end of the coil spring, and
**characterized in that** a top portion of the moving object, which is projected radially outward from the radial mounting hole to engage with an inner circumferential surface of the hub sleeve, is formed into a shape having an engagement portion extending linearly in the axial direction.

2. A synchronization device for a manual transmission according to claim 1, **characterized in that** the engagement portion being formed at the top portion of the moving object and extending linearly in the axial direction has one of a band-like shape and a linear shape.
